# FASCICULE DE BREVET EUROPEEN

(11) **EP 0 369 276 B1**
(45) Date de publication et mention de la délivrance du brevet: **05.01.1994**
(21) Numéro de dépôt: 89120482.8
(22) Date de dépôt: 06.11.1989
(51) Int. Cl.: H04L 12/42

(54) **Système d'échange de messages en temps réel entre stations reliées par une liaison en boucle, notamment entre stations d'un central de télécommunications**
System zum Echtzeitnachrichtenaustausch zwischen auf einer Ringleitung angeschlossenen Stationen, insbesondere zwischen Stationen einer Fernmeldevermittlungsanlage
System for real time exchange of messages between stations connected by a closed-loop, especially between stations of a telecommunication exchange

(30) Priorité: 14.11.1988 FR 8814759
(43) Date de publication de la demande: 23.05.1990
(73) Titulaire: ALCATEL CIT, 75008 Paris (FR)
(72) Inventeur: Guezou, Jean, F-22300 Lannion (FR); Le Goic, Serge, F-22710 Penvenan (FR); Roche, Christian, F-22700 Perros-Guirec (FR)
(74) Mandataire: Weinmiller, Jürgen

(56) Documents cités:
- EP-A- 0 052 390
- EP-A- 0 160 300
- US-A- 4 009 469
- IBM TECHNICAL DISCLOSURE BULLETIN, vol. 24, no. 11B, avril 1982, pages 6153-6154, New York, US; W.D. BRODD: "Selective acknowledgment and retransmission ina packet switched network"

## Description

L'invention concerne l'échange d'informations entre des stations connectées par une liaison en boucle.

Le brevet US-A-4 009 469 décrit un système de communication entre une station dite centrale et des stations dites éloignées, par une liaison en boucle à deux anneaux. Les stations éloignées ne communiquent pas directement entre elles, mais par l'intermédiaire de la station centrale. Cette dernière est chargée de régler les conflits entre stations voulant accèder à une même station destinataire; et de détecter les défaillances du système. Chaque station est assignée à un anneau fixé. Lorsque la station centrale détecte une défaillance sur un anneau, elle commande les stations éloignées qui étaient assignées à cet anneau, pour les assigner à l'autre anneau.

Il existe différentes liaisons en boucle, de topologie en anneau, dont les caractéristiques de raccordement et de fonctionnement sont définies dans la norme IEEE 802.

Dans cette norme le standard 802-5 s'applique aux topologies en anneau utilisant une méthode d'accès par jeton, et définit le niveau 1 (niveau physique) et une partie du niveau 2, appelée MAC (Medium Access Control) ou couche basse du niveau 2; il s'agit du niveau de la liaison de données consistant en la définition de la commande d'accès à l'anneau.

Le standard 802-2 est relatif à la définition de la commande de la liaison logique LLC (Logic Link Control); il s'agit de l'autre partie du niveau 2, appelée couche haute.

Le standard 802-1 concerne les niveaux supérieurs.

Sur l'anneau un motif de quelques octets, appelé jeton, circule en permanence. Si aucune station n'émet, le jeton est libre. Quand une station A désire émettre, elle prend le jeton, le marque occupé, et émet ses données, qui constituent un message vers une station destinataire B; aucune station ne peut alors émettre. Au passage du message, la station B reconnaît son adresse, copie le message de données qui lui est destiné et marque un accusé de réception.

Après retour du message, la station émettrice A reconnaît l'accusé de réception, et efface les données émises ainsi que l'état d'occupation du jeton; le jeton redevient libre pour toutes les stations.

L'exploitation du standard 802-5 présente les avantages suivants :
- possibilité de raccorder un grand nombre de stations, jusqu'à 256, sur un anneau, et d'ajouter facilement des stations sans interruption de trafic,
- liaisons de type asynchrone entre les stations,
- possibilité de diffusion simultanée d'une station vers plusieurs ou toutes les stations,
- excellente qualité de la transmission des messages entre les stations,
- disponibilité de procédures d'exploitation et de défense de l'anneau adaptées aux besoins.

En ce qui concerne la qualité de transmission et la sécurité de fonctionnement, l'application du standard 802-5 permet :
- la déclaration automatique de chaque station par simple enfichage physique sur l'anneau,
- le diagnostic de l'interface d'accès à chaque connexion,
- la déclaration automatique d'une station chargée de la surveillance du jeton, et en cas de défaillance de celle-ci, son remplacement automatique par une autre station,
- la reconfiguration de l'anneau en cas de défaillance.

Les caractéristiques d'un anneau à jeton sont :
- au niveau physique :
   . la transmission asynchrone en point à point permettant des longueurs de connexion importantes,
   . un support physique fonction des performances : paire téléphonique blindée, coaxial, ou fibre optique,
   . le débit : 4 Mbit/s, 16 Mbit/s, 100 Mbit/s,
   . la loi de codage (Manchester) offrant un premier niveau de défense de la transmission,
   . la protection des informations par contrôle de redondance cyclique pour la détection des erreurs,
   . les composants et protocoles normalisés pour la version à 4 Mbit/s (standard 802-5)
- au niveau liaison: la couche basse, MAC, du niveau 2 est normalisée (standard 802-5) et implantée dans un circuit des adaptateurs ; un exemple d'un tel circuit est le circuit TMS 380 de la société TEXAS INSTRUMENTS.

Les principaux services rendus par la couche basse MAC sont :
. messages de longueur variable,
. intégration de la défense du niveau 2,
. dialogue en point à point, ou diffusion,
. gestion de différents niveaux de priorité.

Une perturbation sur l'anneau peut être de durée limitée comme c'est le cas par exemple lors d'une insertion ou d'un retrait d'une station, ou de longue durée en cas de panne. Des mécanismes sont prévus au niveau de la couche basse MAC pour la défense de l'anneau, voire l'élimination de la station responsable de la panne.

La détection et le confinement de la panne de l'ordre de quelques millisecondes à quelques secondes ou dizaines de secondes sont incompatibles avec les besoins d'une transmission de données travaillant en temps réel, comme c'est le cas par exemple en commutation dans un central de télécommunications; la couche haute LLC du niveau 2, généralement implantée dans l'adaptateur, ne convient pas à un fonctionnement en temps réel.

L'invention a pour but de permettre à des stations échangeant en temps réel à l'aide d'une boucle du type à anneau à jeton de continuer leur échange lors d'une perturbation sur ladite boucle.

L'invention a également pour but d'éviter toute perte ou déséquencement de messages lors d'une perturbation.

L'invention a pour objet un système d'échange de messages en temps réel entre stations reliées par une liaison en boucle à deux anneaux, chaque station comportant un adaptateur par anneau, un coupleur équipé d'un processeur et relié aux adaptateurs, et un terminal équipé d'au moins un processeur et relié par un bus au coupleur, ledit bus acheminant vers le terminal les messages reçus via un adaptateur et le coupleur, et acheminant vers le coupleur les messages délivrés par le terminal pour émission,
caractérisé en ce que, dans chaque station, chaque adaptateur comporte des moyens pour appliquer uniquement des procédures correspondant au niveau 1 et à la couche basse du niveau 2, notamment pour accéder aux anneaux par des jetons;
et le coupleur comporte :
- une file d'attente d'émission, pour chaque anneau, pour y stocker des messages à émettre;
- des moyens pour appliquer un protocole de niveau 2 haut et 3, ces moyens comportant :
   -- des moyens pour attribuer une moitié des liaisons logiques à chaque anneau;
   -- des moyens pour attribuer toutes les liaisons logiques à un seul anneau lorsque l'autre anneau est en panne;
   -- des moyens pour supprimer les erreurs de transmission;
   -- des moyens pour détecter des déséquencements de messages;
   -- des moyens pour détecter des duplications de message;
   -- des moyens pour détecter des pannes d'anneau ou de station;
   -- des moyens pour détecter des arrêts momentanés de trafic dûs à un retrait ou une insertion d'une station.

L'invention va être décrite à l'aide d'exemples de réalisation illustrés par les figures annexées dans lesquelles :
- la figure 1 représente un système d'échange entre des stations de l'invention,
- la figure 2 est un schéma fonctionnel d'un coupleur d'une station,
- la figure 3 est un schéma fonctionnel d'un central de télécommunications utilisant le système d'échange de l'invention.

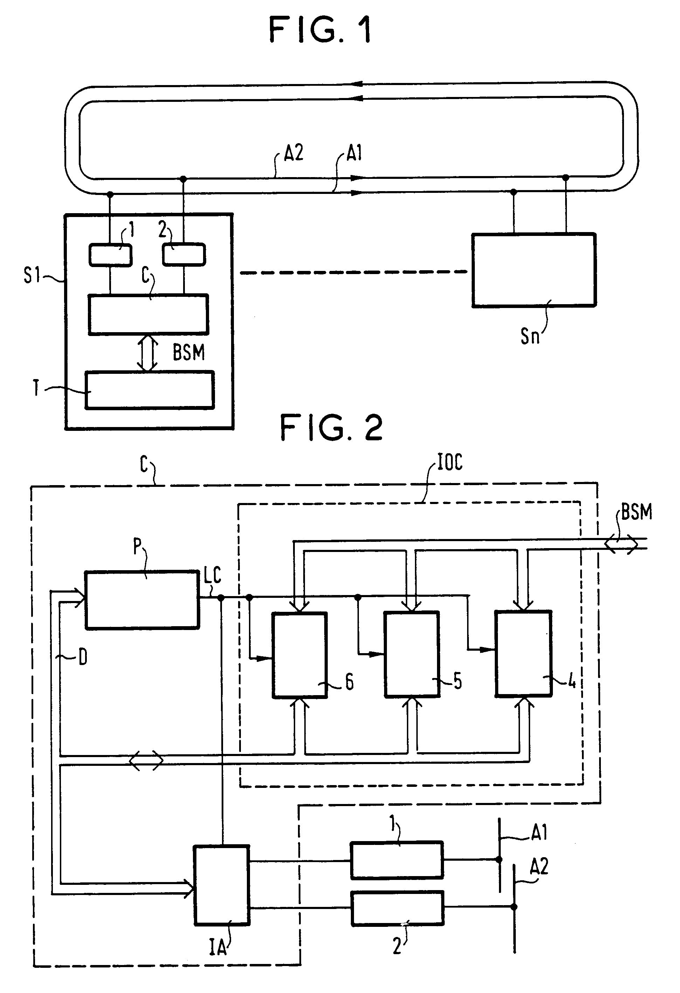

Dans la figure 1, les stations S1 à Sn sont reliées par deux anneaux A1 et A2, à jeton, le sens de circulation des jetons étant le même sur les deux anneaux. Chaque station comporte un terminal T qui est le coeur de la station, relié par un bus BSM à un coupleur C lui-même relié à deux adaptateurs 1 et 2, chaque adaptateur étant relié à un anneau ; par exemple l'adaptateur 1 est relié à l'anneau A1 et l'adaptateur 2 est relié à l'anneau A2. Chaque adaptateur comporte des mémoires d'émission et des mémoires de réception de messages, et un circuit de traitement traitant uniquement le niveau 1 et le niveau 2 couche basse MAC de la norme 802 de l' IEEE ; ce circuit est par exemple le circuit TMS 380 de la société Texas Instruments, spécialement prévu à cet effet. Le coupleur C comporte un processeur pour gérer les échanges entre la station et les anneaux qui travaillent en partage de charge ; à cet effet un protocole de niveaux 2 haut et 3 est implanté dans le processeur du coupleur.

Chaque circuit de traitement d'un adaptateur comporte un processeur, et dès qu'une trame émission est chargée dans une des mémoires d'émission de l'adaptateur et est donc en attente ou en cours d'émission, le processeur de l'adaptateur prépare l'émission suivante en chargeant la trame suivante à émettre dans une autre mémoire d'émission de l'adaptateur. Dans la suite de la description on désignera par processeur de l'adaptateur le processeur du circuit de traitement. De même chaque terminal d'une station comportant un ou plusieurs processeurs, ceux-ci seront désignés par processeur (s) de station.

La défense de l'ensemble des adaptateurs reliés sur un anneau est constituée de trois entités logiques.
. le collecteur d'erreurs d'anneau (Ring error monitor) chargé de collecter toutes les erreurs détectées par les adaptateurs,
. le superviseur (Network manager) chargé de contrôler et de modifier l'état individuel des adaptateurs et de gérer la configuration de l'anneau,
. le serveur de paramètres (Ring parameter server) chargé de fournir les différents paramètres nécessaires au fonctionnement du réseau ; il n'est utilisé qu'en phase d'initialisation.

Chacune de ces trois entités logiques a une adresse fonctionnelle et est implémentée dans un processeur de station.

Un coupleur d'une station n'a à connaltre les machines logiques, et éventuellement la ou les entités logiques implantées dans la station, que pour assurer l'orientation des messages ; à la réception ou des accusés de fin d'émission des messages à ce titre il doit connaltre la configuration de la station où il se trouve, c'est-à-dire, pour ce qui concerne l'échange des informations, les descripteurs des diverses files dont il devra assurer la gestion.

La figure 2 est un schéma fonctionnel d'un coupleur C d'une station. Un processeur P est relié par un bus D et une liaison de commande LC, à une interface adaptateurs IA et à une interface terminal IOC. L'interface adaptateurs IA est reliée aux adaptateurs 1 et 2, eux-mêmes reliés aux anneaux A1 et A2. L'interface terminal IOC est egalement reliée au terminal T de la station par le bus BSM ; cette interface IOC comprend une mémoire morte programmable 4, de type EPROM, un ensemble de registres 5 et une mémoire 6, qui sont reliés aux bus D et BSM et à la ligne de commande LC. La mémoire 6 contient les files d'attente émission, par exemple 5 files par adaptateur, c'est-à-dire 1 file pour chacun des 4 niveaux de priorite de traitements possibles par un terminal, plus une file pour les messages réaiguillés qui ont déjà subit une tentative d'émission via l'autre adaptateur; en réception les messages reçus sont stockés dans 4N files du terminal, à l'interface coupleur terminal, 4 étant le nombre de niveaux de priorité de traitements possibles et N le nombre de machines logiques du terminal ; l'ensemble de registres 5 contient les informations de couplage au bus BSM. La mémoire à accès direct 6 contient toutes les informations nécessaires au fonctionnement du coupleur et notamment le protocole de niveaux 2 haut et 3.

On désignera, dans la suite de la description, par liaison logique de données un couple émetteur/destinataire, l'émetteur étant une station et le destinataire étant soit une station soit un groupe de stations. Il y a deux liaisons logiques de données par couple émetteur/destinataire, l'une utilisant prioritairement un des anneaux et l'autre utilisant prioritairement l'autre anneau.

Les principales fonctions relatives au transport des messages, assurées par les niveaux 2 haut et 3 sont : la gestion des anneaux, la détection et la correction des erreurs de transmission, la protection contre les déséquencements, duplications, et les pannes.

Gestion des anneaux.

Les deux anneaux fonctionnent en partage de charge. Pour chaque station une moitié des liaisons logiques de données utilise prioritairement un anneau et vice versa ; les messages d'une liaison logique de données comportent un numéro de séquence avant, NSA, chaque message étant numéroté en avant modulo M, M étant égal à 256.

Lors des retours à un fonctionnement sur les deux anneaux, suite à une panne, il y a rééquilibrage du trafic. En fonctionnement normal, c'est-à-dire en l'absence de toute erreur, une liaison logique de données ne dispose que d'un chemin physique, c'est-à-dire d'un anneau ; il n'y a donc pas de déséquencement des messages. Détection et correction des erreurs de transmission.

La détection d'erreurs par l'émetteur (station émettrice) est assurée en utilisant l'accusé de réception de niveau 1 fourni par l'adaptateur : indicateur d'erreur, de trame copiée, d'adresse non reconnue, et en mettant en oeuvre une temporisation de message. Pour ces cas de fautes, le taux de pertes des messages à respecter est inférieur à 10 ⁻⁷, car il s'agit de fautes détectées par l'émetteur et qui par conséquent peuvent être traitées correctement, puisque le terminal de la station émettrice est prévenu et que le coupleur fournit les coordonnées explicite du message en cause. Ce taux de pertes des messages est obtenu par un dimensionnement adéquat des mémoires tampons de réception de l'adaptateur et par réémission via l'autre anneau des messages erronés, une réémission étant suffisante.

Protection contre les déséquencements, duplications et fautes non détectées.

Le déséquencement des messages peut survenir lors des cas d'exception suivants :
- défaillances d'un adaptateur ou d'une station (coupleur, terminal),
- insertion ou retrait de stations,
- fautes de transmission affectant un anneau ou un adaptateur,
- congestion d'un adaptateur.

Le principe de partage du trafic sur les deux anneaux (un anneau par liaison logique de données) limite l'activation de cette fonction de protection aux cas d'exception, le taux de déséquencement des messages étant inférieur a 10 ⁻⁷.

La duplication des messages peut se produire à l'occasion de chaque faute de transmission, dont l'occurence est estimée à 10⁻⁵, ou de panne non encore détectée, qui sont des cas typiques de réémission de message. En pratique il suffit qu'une faute intervienne sur le chemin de retour, entre le destinataire et l'émetteur, c'est-à-dire en moyenne une faute sur deux, pour qu'il y ait duplication de message.

La détection et la correction des fautes dans ces cas d'exception sont faites dans le récepteur, c'est-à-dire la station destinataire d'un message. Pour les messages non diffusés la procédure utilisée est la suivante. Le récepteur surveille la suite des numéros de séquence avant, NSA, par liaison logique de données ; un trou dans cette suite, ou la réception de deux numéros identiques, est synonyme de faute.

En cas de détection de message manquant sur une liaison logique de données (deux NSA distants de plus de une unité), la procédure est la suivante : le, ou les, messages arrivés trop tôt sont stockés dans une file temporaire dans le coupleur, pour attendre éventuellement le message en retard, et continuer à fournir en séquence les messages au terminal ; cette attente est protégée par une temporisation de quelques millisecondes au bout de laquelle les messages sont délivrés au terminal ; si le message manquant arrive après la temporisation, le coupleur ne le délivre pas ; l'occurence de cet évènement est estimée inférieure à 10 ⁻¹⁰.

La saturation des files temporaires doit se produire avec un taux inférieur à 10 ⁻³.

En cas de détection de message dupliqué, le coupleur ne doit délivrer au terminal le message qu'en un seul exemplaire.

On va examiner à présent les cas d'exception indiqués ci-dessus, qui sont des cas potentiels de basculement d'anneau, et indiquer les solutions permettant de limiter les basculements inutiles.

### Cas de pannes adaptateur

On va examiner les protections nécessaires pour qu'une panne ne perturbe pas l'écoulement du trafic global, sans présumer de la qualité des moyens de détection propres à la défense : efficacité et rapidité.

Selon la localisation de la panne, le type de la panne et les moyens de détection, deux types de pannes peuvent avoir des répercussions sur l'ensemble du trafic ; ces deux types de panne sont examinés ci-après :
- la panne provoque une absence de jeton ; par exemple le moniteur actif ne réussit pas à émettre un signal d'épuration d'anneau (ring purge) pendant une seconde, et décide d'entrer dans la phase moniteur contention. Dans un tel cas de faute aucun des adaptateurs reliés à l'anneau ne reçoit de signal, les diverses temporisations de protection standard étant de l'ordre de la seconde, temps largement supérieur au temps de saturation des files d'attente. Il faut donc que le basculement d'anneau ait lieu bien avant, le critère de décision de basculement étant une temporisation d'émission, inférieure au temps de saturation des files, par exemple 16 ou 32 ms, et supérieure au temps typique de recouvrement d'anneau suite à retrait ou insertion de station. Cette temporisation d'émission est armée par le processeur du coupleur au moment de la commande d'émission d'un message par un adaptateur jusqu'à la réception de l'état d'émission. En cas de dépassement de la temporisation d'émission il y a basculement sur l'autre anneau. Ce type de panne va provoquer le passage sur un seul anneau de toutes les stations de manière quasi simultanée ; à cette occasion il ne doit y avoir aucune perte ni déséquencement de message. A la réception des messages les processeurs des coupleurs des récepteurs corrigeront les déséquencements éventuels à l'aide des numéros de séquence avant, NSA, comme indiqué précédemment.
- la panne ne provoque pas d'absence de jeton, mais les messages ne sont jamais copiés par l'adaptateur de la station destinataire ; l'émetteur, c'est-à-dire la station qui émet un message reçoit toujours l'information "adresse non reconnue" ou "trame non copiée". Pour le bon écoulement du trafic il est nécessaire de se protéger de tels cas de faute qui peuvent pénaliser fortement les coupleurs émetteurs ; en effet l'émission d'un message vers une station dont l'adaptateur est en panne est suivie d'une réémission du message pour essayer de joindre la station destinataire. Ceci est le cas typique d'une panne adaptateur qui ne perturbe pas la circulation du jeton, mais ce peut être également un cas de congestion au niveau de l'adaptateur ou de la station destinataire.

Pour ces cas de panne, le critère de détection est le débordement d'un compteur du nombre d'échecs vers une station donnée via un anneau ; l'émetteur décide de basculer sur l'autre anneau pour essayer de joindre cette station.

### Insertion ou retrait d'adaptateur.

Cette opération provoque l'arrêt du trafic sur l'anneau correspondant à l'adaptateur : perte momentanée du signal, disparition du jeton. Tant que la durée de la perturbation reste admissible, c'est-à-dire tant que l'on peut stocker les messages dans les files émission : temps de l'ordre de 10 à 15 ms, il n'est pas souhaitable de basculer.

La durée des coupures d'anneau qui résultent de l'insertion ou du retrait d'un adaptateur peut être variable, en fonction de la presence ou non du moniteur actif sur la station de cet adaptateur (minimum de 50 ms de blocage de l'anneau lors du retrait d'un moniteur actif, car c'est lui qui régénère le signal d'horloge), et de la méthode utilisée pour retirer l'adaptateur (coupure d'alimentation ou commande de dèsintertion).

En conséquence une même station n'est pas moniteur actif sur les deux anneaux.

Dans la plupart des cas, en particulier pour les cas d'insertion d'adaptateur, cette opération d'insertion ou de retrait d'un adaptateur se réalise en moins de 10 ms correspondant à la durée de perturbation provoquée par le relais d'insertion de l'adaptateur ; pour les autres cas, la temporisation d'émission, 10 à 15 ms, prévue précédemment pour les cas de panne, doit permettre de décider du basculement : une station émettrice décide alors d'émettre tous ses messages sur l'autre anneau.

### Fautes de transmission affectant un anneau ou un adaptateur.

Pour les fautes de ce type qui sont transistoires, la réémission du message via l'autre anneau doit permettre de réussir l'émission à coup sûr, et le basculement n'a pas lieu d'être prolongé pour les messages suivants.

### Congestion adaptateur

Ce cas en tant que tel ne doit pas amener de basculement. En cas de congestion adaptateur la procédure est la suivante : après un premier échec d'une émission destinée à une station via un anneau par suite de congestion adaptateur dans la station destinataire, une seconde tentative d'émission est faite via l'autre anneau.

Tous les échecs relatifs à une liaison logique de données, qu'ils soient dûs à une panne adaptateur ou à une congestion adaptateur, sont comptabilisés dans les coupleurs des stations par un compteur du nombre d'échecs à raison d'un compteur par liaison logique de données, et le basculement n'est décidé qu'en cas de débordement du compteur ; bien entendu les échecs relatifs à une liaison logique de données ne sont comptabilisés que dans la station émettrice.

Dans chaque station ces compteurs sont exploités par le logiciel de défense du coupleur pour détecter rapidement les fautes et veiller à leur réactualisation.

Le coupleur, sur débordement du compteur relatif à une liaison logique de données décide l'inaccessibilité de ladite liaison et le signale à la défense locale. La défense locale fait la synthèse des deux liaisons logiques de données et déclare alors la station destinataire inaccessible. La défense locale est une entité logicielle qui fait la synthèse de toutes les fautes ou anomalies détectées par une station. Ce cas de perte de message détectée est admissible et ce fonctionnement permet essentiellement de réduire la probabilité de basculement pour les simples cas de congestion ; le prochain message sera affecté du même numéro de séquence avant que celui qui n'a pu être émis.

Quelle que soit la raison à l'origine d'un basculement, celui-ci ne doit entraîner aucune perte ni déséquencement de messages. Les déséquencements, s'il y en a, seront corrigés dans les stations réceptrices, dans la limite d'une temporisation, chaque station réceptrice ne cherchant à corriger les déséquencements que pendant par exemple les 10 à 15 ms qui suivent le basculement.

Le numéro de séquence avant, NSA, permet de détecter un déséquencement ou une perte sur une liaison logique de données ; toute rupture dans la suite des numéros de séquence avant provoque la mise en attente, dans une file d'attente réception, des messages arrivés trop tôt pendant un temps maximum fixé par la temporisation ; à l'expiration de la temporisation on considère qu'il y a perte du ou des messages manquants et les messages de la file d'attente réception sont délivrés au terminal.

Le basculement s'accompagne d'une information émise à destination de la défense locale qui sera alors maître d'oeuvre pour le retour sur l'anneau normal. Ce retour sera effectif après réussite d'une procédure d'essai de retour sur anneau normal à l'expiration d'une temporisation dont la valeur est supérieure au temps de détection des pannes.

Une tentative d'émission est considérée comme infructueuse par suite d'une réception d'une erreur (trame non copiée, faute de transmission, etc) ou par suite du débordement de la temporisation d'émission armée dans l'adaptateur par le processeur du coupleur au moment de la validation de la commande d'émission du message à l'adaptateur.

Après K tentatives d'émissions non réussies d'un messages via les deux anneaux, P tentatives sur un anneau et Q tentatives sur l'autre anneau avec K = P+Q, le message est perdu ; il n'y a pas pour autant basculement définitif d'un anneau sur l'autre. Sur des anneaux ayant un débit de 4 Mbits/s on prendra K = 2, P = Q = 1 ; pour des débits supérieurs la valeur de K sera égale à quelques unités et au plus égale à 4.

Comme indiqué précédemment, tous les cas d'échecs relatifs à une liaison logique de données sont comptabilisés par un compteur à raison d'un compteur par liaison logique de données, et toute émission d'un message est protégée par une temporisation d'émission de l'ordre de 10 à 20 ms, dont la durée est supérieure au temps moyen d'indisponibilité passagère de l'anneau créée par l'insertion ou le retrait d'une station, et inférieure au temps de saturation des files d'attente émission ; le débordement de la temporisation d'émission est significatif d'une indisponibilité globale de l'anneau.

Suite au débordement d'un compteur du nombre d'échecs d'une liaison logique de données il y a basculement de ladite liaison logique de données sur l'autre anneau ; à l'expiration de la temporisation d'émission, le coupleur d'une station décide le basculement, sur l'autre anneau, de toutes les liaisons logiques de données qu'il gère en émission sur l'anneau dont la temporisation d'émission vient de déborder et qui est considéré comme indisponible. Un essai de retour sur ledit anneau indisponible est fait plus tard, à l'initiative de la défense locale, afin de permettre un rééquilibrage du trafic de la station sur les deux anneaux.
On va considérer à présent le cas de la diffusion d'un message.

La diffusion est une facilité offerte grâce à la notion d'anneau qui permet de réduire considérablement le nombre de messages échangés, mais elle n'est pas traitée de façon particulière par les adaptateurs. Il suffit en effet qu'une station accepte un message pour faire croire que la diffusion a réussi, puisque les bits de trame copiée FCI et d'adresse reconnue ARI ont une valeur nulle à l'émission ; en effet dans le cas d'un message diffusé, la station émettrice ne peut jamais savoir, par l'analyse des bits FCI et ARI qu'elle reçoit, si le message diffusé à été reçu dans toutes les stations destinataires. Ceci a pour conséquences :
qu'il est donc nécessaire de garantir un taux de pertes de messages, en cas de congestion adaptateur, inférieur à 10 ⁻¹⁰, car toute perte de message est assimilable à une erreur non détectée :
. que le mécanisme de protection contre les pannes adaptateur basé sur un comptage du nombre de fautes par liaison logique de données ne convient pas dans le cas de la diffusion car une panne adaptateur passe inaperçue.

Les fautes de transmission sont par contre détectées et entraînent une rediffusion systématique du message. Pour tous les autres cas, les messages diffusés sont traités de la même façon que les autres messages.

Les messages diffusés sont au même titre que les autres messages, affectés d'un numéro de séquence avant.

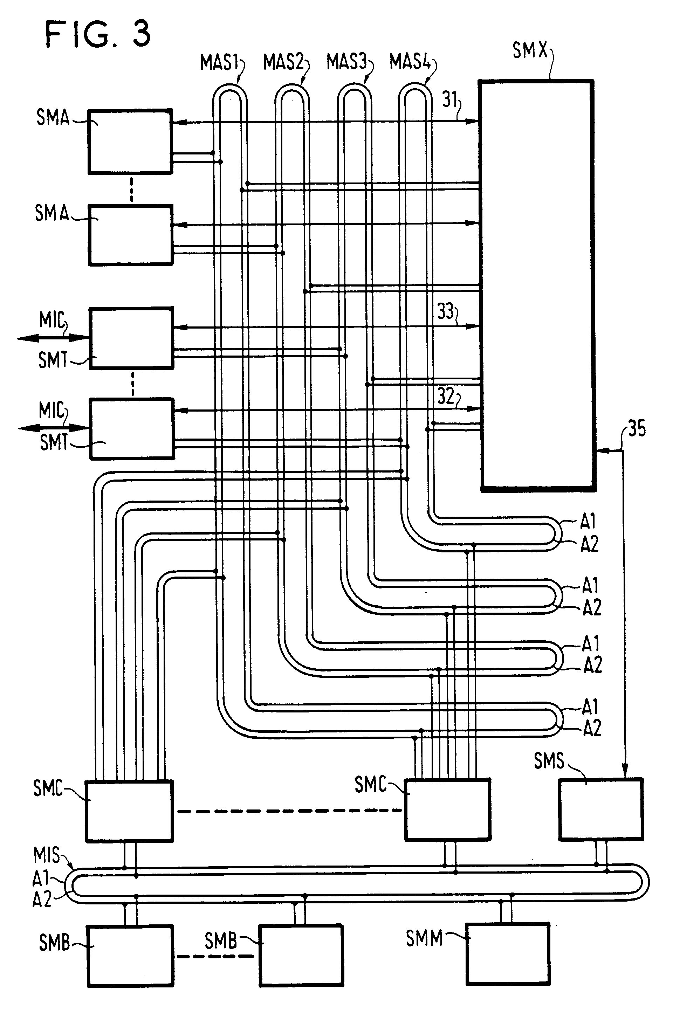

La figure 3 représente un central de télécommunication dans lequel les différents organes qui constituent chacun une station sont reliés par des liaisons en boucle de l'invention.

Les stations SMB, SMC, SMS, SMM sont des stations de commande reliées entre elles par une liaison en boucle interstations de commande MIS, constituée par deux anneaux A1 et A2.

Les stations SMA et SMT1 à SMTn sont respectivement, m stations équipements de tonalités et auxiliaires, et n unités de raccordement reliées à des liaisons multiplex MIC à 2 Mbit/s ; ces stations sont reliées chacune à un réseau de connexion SMX par des liaisons multiplex 31, 32, 33, respectivement. Le réseau de connexion et les stations sont reliés à des liaisons en boucle d'accès aux stations de commande MAS1 à MAS4, ayant chacune deux anneaux A1 et A2. Le réseau de connexion MCX est relié à chacune des liaisons en boucle et aux deux anneaux de chacune d'elles, et chaque station est reliée aux deux anneaux d'une liaison en boucle. Le nombre de n des liaisons en boucle varie de 1 à 4 selon la capacité du central de télécommunications, et le débit des liaisons, et les stations sont réparties sur les liaisons en boucle de manière à répartir le trafic. Chaque station sémaphore SMS est reliée par une liaison multiplex 35 au réseau de connexion SMX.

Le nombre des stations de commande SMB, SMC et SMS est fonction de la capacité du central ; chaque station de commande SMC est également reliée à toutes les liaisons en boucle MAS.

Les stations de commande supportent des machines logiques, implantées dans le terminal de chaque station ; chaque machine logique correspond à une fonction implantée dans un processeur du terminal et une station supporte une ou plusieurs machines logiques. Les différentes machines logiques sont :
- Machine logique marqueur (MQ), qui effectue :
   . l'aiguillage des messages entre le réseau de connexion RCX et les stations d'une part, et entre les unités de raccordements URM et les autres stations d'autre part,
   . la commande et le contrôle des connexions du réseau de connexion,
   . la gestion des liaisons multiplex 31 à 34 auxquelles le réseau de connexion est relié,
   . la gestion des positions d'opératrices,
   . la fonction passerelle entre les boucles MIS et MAS.
- Machine logique multienregistreur (MR), qui assure l'établissement et la rupture des communications, ainsi que les appels d'essais.
- Machine logique taxeur (TX) qui est chargée du calcul du montant des communications, de l'établissement de la facturation détaillée et de la gestion des comptes d'abonnés, de l'observation de trafic temporaire et de la supervision des abonnés taxés.
- Machine logique traducteur (TR), chargé d'effectuer et de fournir aux machines logiques multienregistreur, taxeur, et usager (voir ci-après) les caractéristiques des abonnés et circuits nécessaires à l'établissement et à la rupture des communications.
- Machine logique sémaphore N^{o}7 (PE/PU), chargée d'effectuer, dans le domaine du traitement de la signalisation du système sémaphore N^{o}7 du CCITT :
   . la gestion des canaux sémaphore (niveau 2),
   . le traitement des messages de signalisation, en particulier la descrimination et la distribution des messages (niveau 3) ;
   . la gestion des ressources téléphoniques (niveau 4),
   . le routage des messages de signalisation (niveau 3).
- Machine logique centrale N^{o}7 (PC) chargée d'effectuer :
   . la gestion du réseau sémaphore, c'est-à-dire la gestion du trafic, la gestion des routes, la gestion des canaux sémaphores,
   . des fonctions de test et de maintenance ;
   . elle assure également la fonction de centralisation des observations.
- Machine logique stations (SM), qui assure les fonctions système de chaque station, elle comprend l'hyperviseur (network manager) et gère la configuration des stations SMB, SMC, SMS, SMA, SMT, SMX, SMM.
- Machine logique réseau de connexion (GX) chargée de la gestion du réseau de connexion SMX.
- Machine logique centrale (OC), chargée de l'aiguillage des messages relatifs à la maintenance, et de l'accès à la machine logique de maintenance (OM) d'un organe d'exploitation et de maintenance.
- Machine logique de raccordement (URM), chargée de la gestion des états de circuits voie par voie et des liaisons multiplex MIC avec des centres satellites numériques et des concentrateurs satellites électroniques distants.
- Machine logique auxiliaire (ETA) chargée de la gestion des tonalités et des états des auxiliaires.
- Machine logique de connexion (COM) chargée de l'établissement, de la supervision et de la rupture des connexions du réseau de connexion SMX.
- Machine logique de maintenance (OM) chargée des fonctions de maintenance de toutes les stations, et des archives.

D'une manière générale l'implantation des machines logiques dans les stations de raccordement est la suivante :
. les machines logiques station (SM) sont implantées dans toutes les stations.
. les machines logiques multienregistreurs (MR), taxeurs (TX) et marqueurs (MQ) sont implantées uniquement sur des stations SMC ;
. les machines logiques sémaphores N^{o}7 (PE/PU) sont implantées uniquement sur des stations sémaphores SMS ;
. la machine logique auxiliaire (ETA) est implantée uniquement dans les stations SMA,
. la machine logique de raccordement (URM) est implantée uniquement dans les stations SMT,
. la machine logique de connexion (COM) est implantée uniquement dans la station SMX, qui est le réseau de connexion,
. les machines logiques centrales (OC) et de maintenance (OM) sont implantées uniquement dans les stations SMM,
. la machine logique traducteur est implantée soit dans une station SMB, soit dans une station SMC,
. la machine logique centrale N^{o}7 (PC) est implantée dans une des stations SMB, SMC, SMS.

La répartition des machines logiques dans les stations de commande et le nombre des stations sont fonction de la capacité du central.

Les répartitions et nombre de stations de commande sont, par exemple :
. pour un central de petite capacité, deux stations SMB équipées en machines logiques PC, deux stations SMC équipées de machines logiques traducteur, marqueur, taxeur et multienregistreur, deux stations sémaphore SMS équipées de machines logiques sémaphore n^{o}7, et une station SMM équipée de machines logiques de maintenance et centrale ;
. pour un central de moyenne capacité, deux stations SMB équipées en machines logiques PC, deux stations SMC équipées en machines logiques multienregistreur, deux machines logiques SMC équipées en machines logiques marqueur, traducteur et taxeur, plusieurs stations sémaphore SMS équipées de machines logiques sémaphore n^{o}7, et une station SMM équipée de machines logiques de maintenance et centrale;
. pour un central de grande capacité, deux stations SMB équipées en machines logiques traducteur, deux stations SMB équipées en machines logiques PC, deux stations SMC équipées en machines logiques taxeur, deux stations SMC équipées en machines logiques marqueur, plusieurs stations SMC équipées en machines logiques multienregistreur, plusieurs stations sémaphore SKS équipées en machines logiques sémaphore N^{o}7 et une station SKM équipée de machines logiques de maintenance et centrale.

Les stations SMB sont reliées uniquement à la liaison en boucle MIS. Les stations SMC sont reliées à la liaison en boucle MIS et à toutes les liaisons en boucle MAS. Les stations SMC comportent donc un coupleur par liaison en boucle MIS et un coupleur par liaison en boucle MAS, alors que les stations SMB et SMS n'ont qu'un coupleur pour les liaisons en boucle MIS.

Les liaisons en boucle MIS et MAS ont des débits de 4 Mbit/s, ou de 16 Mbit/s par exemple ; chaque liaison en boucle étant constituée de 2 anneaux, il s'agit bien évidemment des débits par anneau.

On a indiqué que le nombre de liaisons en boucle MAS variait de 1 à 4 selon la capacité du central et le débit des liaisons. A titre d'exemple on aura une liaison en boucle MAS à 4 Mbit/s pour 512 liaisons multiplex à 2 Mbit/s chacune, soit 4 liaisons en boucle MAS pour un central assurant le trafic de 2048 liaisons multiplex. Avec des liaisons en boucle MAS à 16 Mbit/s on aura une liaison en boucle pour 1024 liaisons multiplex à 2 Mbit/s, soit 2 liaisons en boucle pour un central assurant le trafic de 2048 liaisons multiplex.

Le système d'échange de messages en temps réel entre stations s'applique à tout ensemble de stations échangeant des messages en temps réel, un central de télécommunications n'étant qu'un exemple d'application. Les réseaux locaux utilisant la méthode à jeton, très utilisés dans les différentes branches de l'industrie pour par exemple la commande de processus industriels de fabrication, de systèmes d'exploitation, sont autant d'applications pour le système d'échanges de l'invention.

## Revendications

1. Système d'échange de messages en temps réel entre stations reliées par une liaison en boucle à deux anneaux (A1, A2), chaque station comportant un adaptateur (1, 2) par anneau, un coupleur (C) équipé d'un processeur (P) et relié aux adaptateurs, et un terminal (T) équipé d'au moins un processeur et relié par un bus (BSM) au coupleur, ledit bus acheminant vers le terminal les messages reçus via un adaptateur et le coupleur, et acheminant vers le coupleur les messages délivrés par le terminal pour émission,
caractérisé en ce que, dans chaque station, chaque adaptateur comporte des moyens pour appliquer uniquement des procédures correspondant au niveau 1 et à la couche basse du niveau 2, notamment pour accéder aux anneaux par des jetons;
et le coupleur comporte :
- une file d'attente d'émission, pour chaque anneau, pour y stocker des messages à émettre;
- des moyens pour appliquer un protocole de niveau 2 haut et 3, ces moyens comportant :
-- des moyens pour attribuer une moitié des liaisons logiques à chaque anneau;
-- des moyens pour attribuer toutes les liaisons logiques à un seul anneau lorsque l'autre anneau est en panne;
-- des moyens pour supprimer les erreurs de transmission;
-- des moyens pour détecter des déséquencements de messages;
-- des moyens pour détecter des duplications de message;
-- des moyens pour détecter des pannes d'anneau ou de station;
-- des moyens pour détecter des arrêts momentanés de trafic dûs à un retrait ou une insertion de station.

2. Système selon la revendication 1, caractérisé en ce que les moyens pour supprimer les erreurs de transmission sur un message émis par un adaptateur de ladite station, comportent des moyens pour détecter un accusé de réception reçu par ledit adapteur et, s'il n'est pas détecté, réémettre ledit message via l'autre adaptateur de la station et l'autre anneau.

3. Système selon la revendication 1, caractérisé en ce que les moyens pour détecter des déséquencements et les moyens pour détecter des duplications comportent :
- des moyens pour émettre des messages comportant chacun un numéro de séquence avant;
- des moyens pour surveiller la suite des numéros de séquencement des messages reçus par la station, sur chaque liaison logique, et détecter ainsi les messages dupliqués et les messages manquants;
- des moyens pour stocker dans une file d'attente les messages reçues par la station;
- des moyens pour ne délivrer audit terminal qu'un seul exemplaire d'un message stocké dans la file d'attente, si les moyens pour surveiller ont détecté qu'il est dupliqué;
- des moyens pour délivrer audit terminal les messages stockés dans les moyens pour stocker, et ayant un numéro de séquence avant supérieur à celui d'un message détecté manquant, si les moyens pour surveiller n'ont pas détecté ce message manquant pendant un délai fixé; et pour ne pas délivrer ce message manquant s'il est reçu après l'expiration de ce délai.

4. Système selon la revendication 1 caractérisé en ce que chaque anneau comporte une station comportant des moyens pour surveiller le fonctionnement de cet anneau exclusivement.

5. Système selon la revendication 1, caractérisé en ce que, dans chaque coupleur, les moyens pour détecter des arrêts momentanés de trafic dûs à un retrait ou à une insertion de station, et pour détecter en outre les pannes d'adaptateur entraînant une perte de jeton, comportent pour chaque anneau, un temporisateur pour retarder l'émission de chaque message; ce temporisateur étant armé à chaque émission de message et désarmé à la réception d'un accusé de réception; ayant une durée de temporisation inférieure à la durée nécessaire pour saturer de messages la file d'attente de l'anneau considéré; et commandant l'assignation de toutes les liaisons logiques à l'autre anneau si le délai expire sans qu'un accusé de réception ait été reçu.

6. Système selon la revendication 1, caractérisé en ce que les moyens pour détecter les pannes d'anneau ou de station, et plus particulièrement pour détecter des pannes d'adaptateur ne provoquant pas une perte de jeton mais provoquant un échec d'émission de message, comportent :
- des moyens pour assigner deux liaisons logiques respectivement aux deux anneaux, pour chaque couple émetteur-destinataire;
- et des moyens pour compter, pour chaque liaison logique les échecs d'émission, et pour basculer l'émission sur l'autre liaison logique lorsque le nombre d'échecs d'émission sur une voie logique dépasse une valeur prédéterminée.

7. Système d'échange de messages selon la revendication 1, caractérisé par le fait qu'il comporte un premier et une deuxième ensembles de stations constituant un central de télécommunications; que les stations du premier ensemble sont des stations de commande (SMB, SMC, SMS, SMM), reliées par une boucle de liaison interstations de commande (MIS) ayant deux anneaux (A1, A2); que les stations du deuxième ensemble sont : des unités de raccordement (SMT), reliées à des lignes mutliplex, des équipements de tonalités et auxiliaires (SMT), et un réseau de connexion (SMX), reliés à au moins une liaison en boucle d'accès aux stations de commande (MAS); que les unités de raccordement, les équipements de tonalités et auxiliaire sont reliés directement au réseau de connexion par des liaisons multiplex ; que les stations de commande sont équipées, d'au moins une machine logique marqueur, multienregistreur, taxeur, sémaphore N^{o}7, traducteur; que chaque station (SMC) qui comporte au moins une machine logique multienregistreur, taxeur, marqueur est également reliée aux liaisons en boucle d'accès aux stations de commande (MAs); et que chaque station sémophore (SMS) qui comporte au moins une machine logique sémaphore N^{o}7, est reliée directement au réseau de connexion (SMX).

8. Système d'échange de messages selon la revendication 7, caractérisé par le fait que les stations du deuxième ensemble sont reliées à des liaisons en boucle d'accès aux stations de commande (MAS1 à MAS4), le réseau de connexion étant relié à toutes lesdites liaisons en boucle; chacune des autres stations du deuxième ensemble étant reliée à une seule desdites liaisons en boucle et étant repartie entre lesdites liaisons en boucle, et que chacune des stations de commande (SMC) équipées d'au moins une machine logique multienregistreur, taxeur, marqueur, est reliée à toutes les liaisons en boucle d'accès aux stations de commande (MAS).

## Claims

1. A system for interchanging messages in real time between stations interconnected by a loop link having two rings (A1, A2), each station having one adapter (1, 2) per ring, a coupler (C) fitted with a processor (P) and connected to the adapters, and a terminal (T) fitted with at least one processor and connected to the coupler via a bus (BSM), said bus conveying messages received via an adapter and the coupler to the terminal, and conveying messages delivered by the terminal for transmission purposes to the coupler,
the system being characterized in that, in each station, each adapter includes means for applying procedures relating to level 1 and the lower layer of level 2 only, particularly for accessing the rings with tokens;
and the coupler includes:
transmission waiting queues for the various rings for storing messages to be transmitted;
means for applying a protocol for the upper layer of level 2 and for level 3, said means including:
means for attributing half of the data logical links to each ring;
means for attributing all the data logical links to a single ring when the other ring is broken down;
means for eliminating transmission errors;
means for detecting messages which are out of sequence;
means for detecting duplicated messages;
means for detecting station or ring breakdowns;
means for detecting short traffic interruptions due to a station being inserted or withdrawn.

2. A system according to claim 1, characterized in that the means for eliminating transmission errors in a message transmitted by an adapter of the said station include means for detecting an acknowledgment received by said adapter and, if no acknowledgment is detected, means for retransmitting said message via the other adapter of the station and the other ring.

3. A system according to claim 1, characterized in that the means for detecting messages which are out of sequence and the means for detecting duplicates include:
means for transmitting messages where each message includes a forwards sequence number;
means for monitoring the sequence numbers of messages received by the station, on each data logical link, and in this way detecting duplicated and missing messages;
means for storing messages received by a station in a waiting queue;
means for delivering to the said terminal, one copy only of a message stored in a waiting queue, if the monitoring means detect that the message has been duplicated; and
means for delivering to the said terminal messages stored in the storing means which have a forwards sequence number larger than that of a missing message, if the monitoring means have not detected said missing message before a fixed deadline; and means for not delivering said missing message if it is received after the deadline has expired.

4. A system according to claim 1, characterized in that each ring includes a station including means for monitoring the functioning of that station only.

5. A system according to claim 1, characterized in that, for each coupler, the means for detecting momentary traffic interruptions due to the withdrawal or insertion of a station, and in addition for detecting adapter breakdowns that cause token loss, include a timer for each ring for delaying the transmission of each message, said timer being started each time a message is transmitted and stopped when acknowledgment of its reception is received; said detecting means:
having a time-out lasting for a period of time shorter than the time needed to saturate the messages in the waiting queue of the ring being considered; and
assigning all the logical data links to the other ring if the deadline expires without an acknowledgment being received.

6. A system according to claim 1, characterized in that the means for detecting ring or stations breakdowns, and more particularly for detecting adapter breakdowns which do not cause token loss but which cause a transmission fault, include:
means for assigning two data logical links to two rings respectively, for each transmitter destination pair; and
means for counting transmission faults for each data logical link, and for switching over transmission to the other data logical link if the number of transmission faults on one logical link exceeds a predetermined level.

7. A message interchange system according to claim 1, characterized by the fact that it comprises first and second sets of stations constituting a telecommunications exchange, by the fact that the stations of the first set are control stations (SMB, SMC, SMS, SMM) interconnected by an inter control station link loop (MIS) having two rings (A1, A2), the fact that the stations of the second set are connection units (SMT) connected to multiplex lines, tone equipments, and auxiliary equipments (SMT), and a switching network (SMX) all connected to at least one loop link (MIS) giving access to the control stations, the fact that the connections units, the tone equipments and the auxiliary equipments, are connected directly to the switching network via multiplex links, the fact that the control stations are fitted with at least one marker logical machine, at least one multiregister logical machine, at least one charging logical machine, at least one No. 7 semaphore logical machine, and at least one translator logical machine, the fact that each control station (SMC) which includes at least one multiregister, charging, or marker logical machine is also connected to the loop links (MAS) giving access to control stations, and the fact that each semaphore station (SMS) which includes at least one No. 7 semaphore logical machine is connected directly to the switching network (SMX).

8. A message interchange system according to claim 7, characterized by the fact that the stations in the second set are connected to loop links (MAS1 to MAS4) giving access to control stations, with the switching network being connected to all of said loop links, and with each of said other stations of the second set being connected to one of said loop links only, said stations being shared between said loop links, and the fact that each control station (SMC) fitted with at least one of the following logical machines: multiregister, charging, and marker; is connected to all of the loop links (MAS) giving access to the control stations.

## Patentansprüche

1. System für den Austausch von Nachrichten in Echtzeit zwischen Stationen, die durch eine Schleifenverbindung mit zwei Ringen (A1, A2) verbunden sind wobei jede Station einen Adapter (1, 2) je Ring, einen Koppler (C), der mit einem Prozessor (P) versehen und mit den Adaptern verbunden ist, und ein Endgerät (T) aufweist, das mit mindestens einem Prozessor ausgestattet und durch einen Bus (BSM) mit dem Koppler verbunden ist, wobei der Bus die über einen Adapter und den Koppler empfangenen Nachrichten dem Endgerät zuführt und die von der Endstation gelieferten Nachrichten dem Koppler zum Senden zuführt,
dadurch gekennzeichnet, daß in jeder Station jeder Adapter Einrichtungen aufweist, die nur Prozeduren entsprechend der Ebene 1 und der unteren Schicht der Ebene 2 anwenden, insbesondere um durch Marken auf die Ringe zuzugreifen; und daß der Koppler aufweist:
- eine Sendewarteschlange für jeden Ring, um darin auszusendende Nachrichten zu speichern;
- Einrichtungen zum Anwenden eines Protokolls der oberen Schicht der Ebene 2 und der Ebene 3, wobei diese Einrichtungen umfassen:
-- Einrichtungen, die jedem Ring eine Hälfte der logischen Verbindungen zuweisen;
-- Einrichtungen, die allen logischen Verbindungen einem einzelnen Ring zuweisen, wenn der andere Ring ausgefallen ist;
-- Einrichtungen zum Unterdrücken der Übertragungsfehler;
-- Einrichtungen zum Erfassen des Außertrittfallens der Nachrichtensequenz;
-- Einrichtungen zum Erfassen von Nachrichtenverdopplungen;
-- Einrichtungen zum Erfassen von Ring- oder Stationsausfällen;
-- Einrichtungen zum Erfassen momentaner Verkehrsstillstände aufgrund einer Herausnahme oder einer Einfügung einer Station.

2. System nach Anspruch 1, dadurch gekennzeichnet, daß die Mittel zur Unterdrückung der Übertragungsfehler in einer von einem Adapter der betreffenden Station gesendeten Nachricht Einrichtungen zur Erfassung einer vom Adapter empfangenen Empfangsbestätigung aufweisen und daß, wenn die Bestätigung nicht erfaßt wird, die betreffende Nachricht erneut über den anderen Adapter der Station und über den anderen Ring ausgesendet wird.

3. System nach Anspruch 1, dadurch gekennzeichnet, daß die Mittel zur Erfassung des Außertrittfallens der Sequenz und die Mittel zur Erfassung von Verdopplungen aufweisen:
- Einrichtungen zum Senden von Nachrichten, die jeweils eine Sequenzordnungsnummer aufweisen;
- Einrichtungen zur Überwachung der Folge der Sequenzordnungsnummern der von der Station empfangenen Nachrichten in jeder logischen Verbindung, und somit Erfassen der verdoppelten Nachrichten und der fehlenden Nachrichten;
- Einrichtungen zum Speichern der von der Station empfangenen Nachrichten in einer Warteschlange;
- Einrichtungen, die an das Endgerät nur ein einziges Exemplar der in der Warteschleife gespeicherten Nachricht liefern, wenn die Einrichtungen zur Überwachung erfaßt haben, daß die Nachricht doppelt vorhanden ist;
- Einrichtungen, die an das Endgerät die in den Einrichtungen zum Speichern abgelegten Nachrichten mit einer Sequenzordnungsnummer liefern, die größer als diejenige einer als fehlend erfaßten Nachricht ist, falls die Überwachungseinrichtungen diese fehlende Nachricht während einer festgesetzten Zeitdauer nicht erfaßt haben, wobei die Einrichtungen die fehlende Nachricht nicht liefern, falls sie erst nach Ablauf der Wartezeit empfangen wird.

4. System nach Anspruch 1, dadurch gekennzeichnet, daß jeder Ring eine Station mit Einrichtungen zum Überwachen der Funktionsweise allein dieses Ringes aufweist.

5. System nach Anspruch 1, dadurch gekennzeichnet, daß in jedem Koppler die Einrichtungen zur Erfassung der momentanen Verkehrsunterbrechungen aufgrund einer Herausnahme oder einer Einfügung einer Station und zur Erfassung von Adapterstörungen mit Markenverlust für jeden Ring eine Zeitverzögerungseinrichtung zum Verzögern der Aussendung jeder Nachricht aufweisen, wobei diese Zeitverzögerungseinrichtung bei jedem Senden einer Nachricht aktiviert und beim Empfangen einer Empfangsbestätigung inaktiviert wird, wobei die Einrichtung eine Verzögerungsdauer hat, die kleiner als die zum Sättigung der Warteschlange des betreffenden Ringes mit Nachrichten benötigte Dauer ist und wobei die Verzögerungseinrichtung die Zuweisung aller logischer Verbindungen an den anderen Ring auslöst, wenn die Verzögerungszeit abläuft, ohne daß eine Empfangsbestätigung erhalten worden ist.

6. System nach Anspruch 1, dadurch gekennzeichnet, daß die Einrichtungen zur Erfassung der Ring- oder der Stationsstörungen und insbesondere zur Erfassung der Adapterstörungen, die nicht einen Markenverlust, sondern einen Fehlschlag der Nachrichtenaussendung verursachen, aufweisen:
- Einrichtungen zum Zuweisen zweier logischer Verbindungen je Sender-Empfänger-Paar an die beiden Ringe; und
- Einrichtungen zum Zählen der fehlgeschlagenen Aussendungen für jede logische Verbindung und zum Wechseln der Aussendung auf die andere logische Verbindung, wenn die Anzahl der fehlgeschlagenen Aussendungen in einem logischen Kanal einen vorbestimmten Wert überschreitet.

7. System zum Austausch von Nachrichten nach Anspruch 1, dadurch gekennzeichnet, daß es eine erste und eine zweite Gruppe von Stationen aufweist, die eine Fernmeldezentrale bilden, daß die Stationen der ersten Gruppe Steuerstationen sind (SMB, SMC, SMS, SMM), die durch eine Zwischenstationssteuerschleifenverbindung (MIS) mit zwei Ringen (A1, A2) verbunden sind, daß die Stationen der zweiten Gruppe aus Anschlußeinheiten (SMT), die an Multiplexleitungen angeschlossen sind, Ruftonerzeugungs- und Hilfseinrichtungen (SMT) und aus einem Vermittlungsnetz (SMX) bestehen, die an mindestens eine Schleifenverbindung zum Zugang zu den Steuerstationen (MAS) angeschlossen sind, daß die Anschlußeinheiten, die Ruftonerzeugungs- und Hilfseinrichtungen über Multiplexverbindungen direkt an das Vermittlungsnetz angeschlossen sind, daß die Steuerstationen mit mindestens einer Markierungslogikmaschine, einer Mehrfachregistrierungslogikmaschine, einer Gebührenberechnungslogikmaschine, einer Semaphorenlogikmaschine N^{o}7 und einer Übersetzungslogikmaschine versehen sind;,daß jede Station (SMC), die mindestens eine Mehrfachregistrierungslogikmaschine, eine Gebührenberechnungslogikmaschine, eine Markierungslogikmaschine enthält, auch durch Schleifenverbindungen als Zugang zu den Steuerstationen (MAS) angeschlossen ist und daß jede Semaphorenstation (SMS), die mindestens eine Semaphorenlogikmaschine N^{o}7 enthält, direkt an das Vermittlungsnetz (SMX) angeschlossen ist.

8. System zum Austausch von Nachrichten nach Anspruch 7, dadurch gekennzeichnet, daß die Stationen der zweiten Gruppen an Schleifenverbindungen zum Zugang zu den Steuerstationen (MAS1 bis MAS4) angeschlossen sind, wobei das Vermittlungsnetz mit allen diesen Schleifenverbindungen verbunden ist, daß jede der anderen Stationen der zweiten Gruppe an eine einzige dieser Schleifenverbindungen angeschlossen ist, wobei die Stationen auf die Schleifenverbindungen verteilt sind, und daß jede der Steuerstationen (SMC), die mit mindestens einer Mehrfachregistrierungslogikmaschine, einer Gebührenberechnungslogikmaschine, einer Markierungslogikmaschine versehen sind, an alle Schleifenverbindungen als Zugang zu den Steuerstationen (MAS) angeschlossen sind.
